# EUROPEAN PATENT APPLICATION

(11) **EP 2 469 265 A1**
(43) Date of publication of application: **27.06.2012**
(21) Application number: 10810052.0
(22) Date of filing: 18.08.2010
(51) Int. Cl.: G01N 17/00

(54) **CORROSION EVALUATION TEST METHOD FOR BALLAST TANK ON SHIP**

(30) Priority: 19.08.2009 JP 2009189612; 18.08.2010 JP 2010182673
(71) Applicant: JFE Steel Corporation, Tokyo, 100-0011 (JP)
(72) Inventor: SHIOTANI, Kazuhiko, Tokyo 100-0011 (JP); KOMORI, Tsutomu, Tokyo 100-0011 (JP)
(74) Representative: Stebbing, Timothy Charles
(86) International application number: PCT/JP2010/064318
(87) International publication number: WO 2011/021714

(57) **Abstract**

Provided is a corrosion evaluation test method for evaluating corrosion of a back side of an upper deck of a ballast tank of a ship. To be more specific, provided is a corrosion evaluation test method for evaluating corrosion of an upper deck of a ballast tank of a ship where, in a corrosion evaluation test cycle where a specimen is subjected to a wet process A of relative humidity of 75% or more and a dry process B of relative humidity of less than 75% and the wet process and the dry process are repeated alternately, the relationship between a time (At) where the specimen is subjected to the wet process A and a time (Bt) where the specimen is subjected to the dry process B is set to 0.05 ≤ Bt/At ≤ 10, the relationship between a wetting rate (Av) and a drying rate (Bv) is set to 0. 1 ≤ Bv/Av ≤ 3.8, and in the wet process, salt is applied to the specimen by spraying any one solution out of sodium chloride aqueous solution, artificial seawater solution or natural ocean water solution to the specimen, by immersing the specimen in the solution or applying the solution to the specimen.

## Description

### [Technical field]

The present invention relates to a corrosion evaluation test method of a back side of an upper deck of a ballast tank which is mounted on a ship such as a coal ship, an ore carrier, an ore coal carrier, a crude oil tanker, a LPG ship, a LNG ship, a chemical tanker, a containership, a bulk carrier ship, a timber carrier, a chip carrier, a refrigerated cargo carrier, an automobile carrier, a heavy cargo ship, a roll-on/roll-off ship, a limestone carrier or a cement carrier.

### [Background Art]

Ballast tanks of a ship play a role of securing safety marine navigation of a ship with seawater filled therein when there is no cargo so that the ballast tanks are subjected to an extremely strict corrosive environment. Accordingly, the prevention of corrosion of a steel material used for ballast tanks is usually acquired by the combination of the formation of an anticorrosion coating film made of an epoxy resin paint and electrolytic protection.

However, even when such anticorrosion measures are taken, because of splash of seawater and the elevation of a temperature of a steel plate due to sunlight, an area around an uppermost part of the ballast tank, particularly a back side of an upper deck is subjected to a stricter corrosive environment and receives severe corrosion.

It is said that a lifetime of the anticorrosion coating film of the ballast tank under such a severe corrosive environment is approximately 10 to 15 years in general so that the lifetime of the anticorrosion coating film is approximately half of a lifetime of a ship (20 to 25 years) . Accordingly, the actual situation is that the anticorrosion coating film maintains the corrosion resistance by performing refinish paint for remaining approximately 10 years from a point of time that a lifetime of the first anticorrosion coating film ends to a point of time that a lifetime of the ship ends. Accordingly, the development of a steel material having excellent corrosion resistance which can extend a period before the refinish paint is started as long as possible and can reduce a refinish paint operation as much as possible has been expected.

However, to develop a steel material having excellent corrosion resistance, it is necessary to establish a corrosion evaluation test method where the corrosion of a ballast tank can be simulated. However, there exists no established test method which satisfies the request up to now.

For example, patent document 1 discloses, as a corrosion test method which simulates a ballast tank, a test method where 1 cycle is constituted of the immersion in artificial seawater for one week and the exposure in the atmosphere having relative humidity of 100% for one week. Although this test method is reasonable as a corrosion test method of a ship bottom portion of a ballast tank, a test corresponding to a dry process of the present invention is not performed and hence, this test method has a drawback that the corrosion of a back side of an upper deck cannot be simulated.

### [Prior art document]

### [Patent document]

patent document 1] JP-A-7-310141

### [Summary of Invention]

### [Task to be solved by Invention]

The present invention is made to effectively overcome the above-mentioned drawback, and it is an object of the present invention to provide a corrosion evaluation test method which can evaluate the corrosion of a back side of an upper deck of a ballast tank of a ship.

### [Means for solving problem]

Inventors of the present invention have, to provide a corrosion evaluation test method which can evaluate corrosion of a back side of an upper deck of a ballast tank of a ship, studied in detail the corrosive environment of a back side of an upper deck of a ballast tank of the actual ship which has not been carried out up to now. The gist of the present invention is as follows.

(1) A corrosion evaluation test method for evaluating corrosion of a back side of an upper deck of a ballast tank of a ship where, in a corrosion evaluation test cycle where a specimen is subjected to a wet process A of relative humidity of 75% or more and a dry process B of relative humidity of less than 75% and the wet process and the dry process are repeated alternately, the relationship between a time (At) where the specimen is subjected to the wet process A and a time (Bt) where the specimen is subjected to the dry process B is set to 0.05 ≤ Bt/At ≤ 10, the relationship between a wetting rate (Av) and a drying rate (Bv) is set to 0.1 ≤ Bv/Av ≤ 3.8, and in the wet process, salt is applied to the specimen by spraying any one solution out of sodium chloride aqueous solution, artificial seawater solution or natural ocean water solution to the specimen, by immersing the specimen in the solution or by applying the solution to the specimen.
Here, the wetting rate Av is a value obtained by dividing a relative humidity change amount when a process is shifted from the dry process to the wet process by time, and the drying rate Bv is a value obtained by dividing a relative humidity change amount when the process is shifted from the wet process to the dry process by time. To be more specific, the drying rate is obtained by dividing the humidity difference when the relative humidity of 85% is changed to the lowest humidity by time. The wetting rate is obtained by dividing the humidity difference when the lowest humidity is changed to the relative humidity of 85% by time. (2) The corrosion evaluation test method for evaluating corrosion of a back side of an upper deck of a ballast tank of a ship, wherein in the above-mentioned constitution (1), the repeating number of times of the wet process A and the dry process B is 30 times or more, and in the wet process, the salt is applied to the specimen by spraying any one solution out of sodium chloride aqueous solution, artificial seawater solution or natural ocean water solution to the specimen, by immersing the specimen in the solution or by applying the solution to the specimen at a rate of one time or more in 30 times.

### [Advantage of Present Invention]

According to the present invention, it is possible to perform a corrosion evaluation test by which corrosion of a back side of an upper deck of a ballast tank of a ship can be evaluated and hence, the development of a steel material for a ship can be efficiently realized.

### [Brief Explanation of Drawings]

Fig. 1 is a view showing a result of measurement with time of temperature and relative humidity at a back side of an upper deck of a ballast tank of an actual ship in a certain year.
Fig. 2 is a view showing one example of a change with time in relative humidity in a corrosion evaluation test according to the present invention.

### [Mode for Carrying Out the Invention]

Hereinafter, the present invention is explained specifically. In the present invention, humidity means relative humidity and is also referred to as RH hereinafter.

A corrosive environment measurement is performed such that a temperature sensor and a humidity sensor are mounted on a back side of an upper deck of a ballast tank of a ship which goes and comes between Japan and Australia, and data are obtained from these sensors with time.

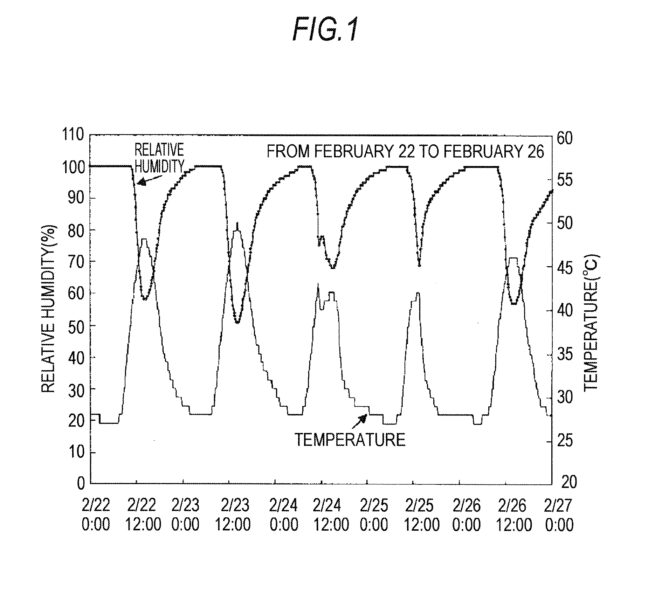

Fig. 1 shows one example of the result. It is understood from Fig. 1 that the temperature becomes the maximum temperature around 12 o'clock at noon, the temperature is lowered toward night, and the humidity is elevated along with the lowering of the temperature. It is also understood that the humidity is lowered along with the elevation of temperature from night to noon. The maximum humidity during this measuring period is measured at night and is 100%. The minimum humidity is measured around 12 o'clock at noon and is approximately 50%. From these results, it is understood that a back side of an upper deck of a ballast tank of the actual ship is subjected to an environment where drying and wetting are repeated. Based on a result of a change with time of a wet state of a steel plate measured by an ACM (Atmospheric Corrosion Monitor) sensor simultaneously with the measurement of humidity and a detection result of Cl (chlorine) in a rust layer which is formed on a specimen placed on a back side of an upper deck of a ballast tank simultaneously, it is confirmed that seawater is deposited to the steel plate. A transition rate (drying rate; Bv) from a wet state to a dry state is RH5.4 to 18.8%/h from the actual ship result, and a transition rate (wetting rate; Av) from a dry state to a wet state is RH5.0 to 50.0%/h from the actual ship result. The drying rate is obtained by dividing the humidity difference when the humidity becomes the minimum humidity from RH85% by time. The wetting rate is obtained by dividing the humidity difference when the humidity becomes RH85% from the minimum humidity by time. Along with the above-mentioned test, steel plates shown in Table 1 are subjected to an exposure test on a back side of an upper deck of a ballast tank of the actual ship.

From the above-mentioned result of the corrosive environment measurement of a ballast tank of the actual ship, as a corrosion evaluation test method, it is found that the targeted result can be acquired by alternately repeating a wet process and a dry process on a condition where seawater is applied to a specimen and by setting a drying rate/wetting rate to a value which falls within a proper range.
Hereinafter, a corrosion evaluation test method according to the present invention is explained in detail.

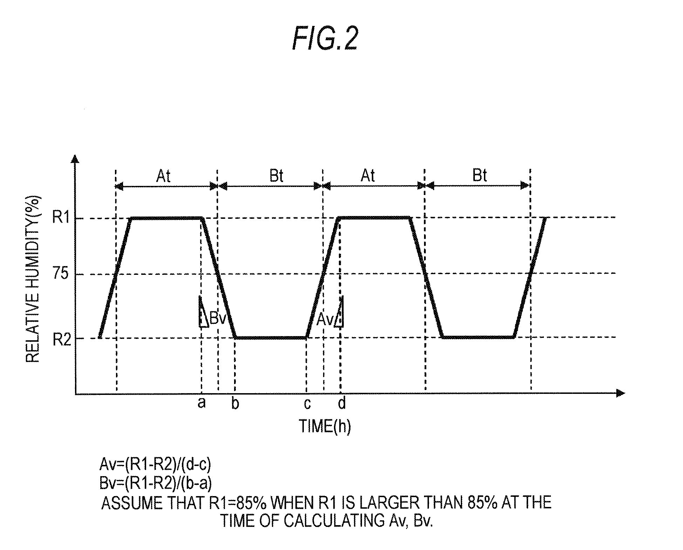

Fig. 2 shows one example of a change with time of relative humidity. In Fig. 2, symbol At indicates a time for a wet process and symbol Bt indicates a time for dry process. Symbol Av indicates a wetting rate and symbol Bv indicates a drying rate.
(1) Repeating number of times of wet process A and dry process B:
   The repeating number of times of the wet process A and the dry process B corresponds to the repeating number of times of wetting and drying on the actual ship. It implies that the larger the repeating number of times, the more the corrosion progresses. Although the repeating number of times may be selected in conformity with the corrosion resistance level of a steel kind to be evaluated, to generate the difference in ranking of corrosion resistance with respect to each steel kind, it is necessary to set the repeating number of times to 30 times or more. On the other hand, even when the repeating number of times exceeds 730 times, no difference is generated in ranking of corrosion resistance with respect to each steel kind and hence, it is desirable to set the repeating number of times to 730 times or less.
(2) Applying salt in wet process with the repeating number of times of wet process A and dry process B set at a rate of one time or more in 30 times:
   The reason that salt is applied to a specimen in wet process with the repeating number of times of wet process A and dry process B set at a rate of one time in 30 times is as follows. When the repeating number of times is less than one time, salt is not applied to the specimen, and this condition differs from a corrosive environment of the actual ship and hence, the repeating number of times is set to one time or more. Even when salt is applied to the specimen twice or more or continuously in the same wet process, this applying of salt is regarded as applying of salt one time. It is reasonable to differentiate the wet process and the dry process based on relative humidity, and a threshold value is set to relative humidity of 75% where NaCl exhibits deliquescent and is brought into a wet state.

(3) range of ratio between time (At) for wet process and time (Bt) for dry process (0.05 ≤ Bt/At ≤ 10):
   With respect to the range of ratio between the time (At) for the wet process and the time (Bt) for the dry process (0.05 ≤ Bt/At ≤ 10), tests were repeatedly carried out mainly aiming at making ranking of corrosion resistance with respect to a steel kind equal between an actual ship exposure test and a corrosion evaluation test explained later, and a lower limit of 0.05 and an upper limit of 10 were found.

Next, the reason that the range of ratio between the time (At) for the wet process and the time (Bt) for the dry process is limited to 0.05 ≤ Bt/At ≤ 10 is explained.

When the value of Bt/At is smaller than 0.05, the ratio of the wetting time becomes large so that there arises a situation where the ranking of corrosion resistance differs from the ranking of corrosion resistance of the actual ship (that is, the corrosion mechanism differs from the corrosion mechanism of the actual ship). Accordingly, a lower limit value is set to 0.05. Further, when the value of Bt/At is larger than 10, the ratio of the drying time becomes excessively large so that a corrosion time becomes short whereby a corrosion promoting element becomes small. Accordingly, an upper limit value is set to 10.

(4) seawater for test
   As seawater for test, any one of NaCl solution, artificial seawater solution and natural ocean water may be used. As a method of applying seawater for test, spraying of seawater to a specimen, immersion of a specimen in seawater or depositing of seawater on a specimen using a pipet and so on or any other method may be used. Here, the concentration of NaCl solution is 2 to 6 mass%. Artificial seawater solution is saline liquid solution which is prepared such that artificial seawater solution has the substantially same composition as seawater and ratios and the concentration of respective components of artificial seawater solution are also similar to ratios and the concentration of respective components of seawater.

Natural ocean water solution is solution whose concentration of salt (sodium chloride and magnesium chloride, potassium chloride and other components other than sodium chloride) falls within a range of 3.0 to 4.0mass%. A method of applying these solutions is performed by depositing salt on a specimen.

(5) 0.1 ≤ Bv/Av ≤ 3.8
   Based on a result of the actual ship, as a relational formula between the wetting rate (Av) and the drying rate (Bv), a formula 0.1 ≤ Bv/Av ≤ 3.8 was established,

The formula 0.1 ≤ Bv/Av ≤ 3.8 was obtained by measuring an environment of the actual ship. When Bv/Av falls within this range, the corrosion mechanism substantially equal to the corrosion mechanism of the actual ship is acquired. That is, when Bv/Av is 0.1 or more, ranking of corrosion resistance agrees with the ranking of corrosion resistance of the actual ship, while when Bv/Av exceeds 3.8, the ranking of corrosion resistance differs from the ranking of corrosion resistance of the actual ship.

### [Embodiment]

Molten steel having the composition shown in Table 1 was produced by a 50kg vacuum melting furnace and, thereafter, steel ingot was produced. Then, the steel ingot was loaded into a heating furnace and was heated at a temperature of 1150°C and, thereafter, was formed into steel plates having a thickness of 30mm by hot rolling. specimens each having a size of 3mmt x 50mmw x 150mmL were taken such that a portion of the steel plate at a position 2mm away from a surface of the steel plate in the depth direction forms a surface of the specimen, and surfaces of the specimens were subjected to shotblasting. Thereafter, specimens each of which has a surface thereof coated with a single layer film (paint film thickness: approximately 100µm) formed of tar epoxy resin paints were prepared. The corrosion resistance evaluation was performed such that a scratch which reaches a surface of base iron was formed from above the paint film in a straight line using a utility knife, and after a predetermined corrosion evaluation test was performed, the corrosion resistance was evaluated based on an area of swelling of paint film which was formed around the scratch. In an exposure test of the actual ship, a specimen was placed on a back side of an upper deck of a ballast tank of the actual ship by using a rack such that a surface of the specimen on which the scratch was formed was directed downwardly. A testing period was 2 years. Further, the corrosion evaluation test was carried out under testing conditions for a testing period both shown in Table 2.

Table 3 shows the result of measurement of the area of swelling of paint film which was formed around the scratch after the predetermined corrosion evaluation test was performed. In the exposure test of the actual ship, ranking of area of swelling of paint film was steel plate C > steel plate B > steel plate A > steel plate D > steel plate E. In the present invention examples 1 to 5 in the corrosion evaluation test, ranking of area of swelling of paint film was steel plate C > steel plate B > steel plate A > steel plate D > steel plate E so that the ranking of area of swelling of paint film was equal to the ranking of area of swelling of paint film in the exposure test of the actual ship. The ratio of area of swelling of the steel plates B, C, D, E with reference to the area of swelling of the steel plate A were also substantially equal between the actual ship and the present invention examples 1 to 5 of the corrosion evaluation test. From the above, it is understood that the corrosion evaluation test condition of the present invention example is reasonable as a corrosion evaluation test method of a back side of an upper deck of a ballast tank of an actual ship.

On the other hand, in the comparison example 1 in the corrosion evaluation test, ranking of area of swelling of paint film was steel plate A > steel plate B > steel plate D > steel plate E > steel plate C. In the comparison example 2, ranking of area of swelling of paint film was steel plate A > steel plate E > steel plate B > steel plate D > steel plate C. In the comparison example 3, ranking of area of swelling of paint film was steel plate A > steel plate B > steel plate E > steel plate D > steel plate C. In the comparison example 4, ranking of area of swelling of paint film was steel plate B > steel plate A > steel plate C > steel plate D > steel plate E. In the comparison example 5, ranking of area of swelling of paint film was steel plate C > steel plate A > steel plate B > steel plate E > steel plate D. In the comparison example 6, ranking of area of swelling of paint film was steel plate B > steel plate A > steel plate C > steel plate D > steel plate E. As a result, the ranking of area of swelling of paint film of comparison examples differed from the ranking of area of swelling of paint film of actual ship. The corrosion environment was always in an immersed state in the comparison example 1 and the corrosion environment was always in a wet state in the comparison example 2 and hence, the corrosion environment did not include the dry process whereby the corrosion environment of the actual ship was not simulated. Accordingly, the ranking of corrosion resistance (swelling of paint film) of comparison examples differed from the ranking of corrosion resistance (swelling of paint film) of actual ship. Although the corrosion environment included the dry process in the comparison example 3 and the comparison example 4, the ratio between the dry process B and the wet process A was excessively small in the comparison example 3 and was excessively large in the comparison example 4 so that the ranking of corrosion resistance (swelling of paint film) of comparison examples differed from the ranking of corrosion resistance (swelling of paint film) of actual ship. The ratio between the drying rate and the wetting rate was excessively small in the comparison example 5 and the ratio between the drying rate and the wetting rate was excessively large in the comparison example 6 and hence, the ranking of corrosion resistance (swelling of paint film) of comparison examples differed from the result of the actual ship. Accordingly, the comparison examples 1 to 6. cannot be adopted as the evaluation test.

**[Table 1]**

| (mass%) | | | | | | | | | |
|---|---|---|---|---|---|---|---|---|---|
| | C | Si | Mn | P | S | Al | Cr | Sn | W |
| Steel plate A | 0.15 | 0.28 | 1.15 | 0.015 | 0.002 | 0.028 | - | - | - |
| Steel plate B | 0.15 | 0.29 | 1.18 | 0.014 | 0.002 | 0.031 | 0.48 | - | - |
| Steel plate C | 0.14 | 0.30 | 1.14 | 0.015 | 0.003 | 0.028 | 1.50 | - | - |
| Steel plate D | 0.14 | 0.28 | 1.17 | 0.016 | 0.002 | 0.027 | - | 0.05 | - |
| Steel plate E | 0.14 | 0.27 | 1.15 | 0.015 | 0.002 | 0.027 | - | - | 0.35 |

**[Table 2]**

| | Kind of test | A (relative humidity≥75%) | | | B (relative humidity<75%) | | | Av (RH%/h) | Bv (RH%/h) | Salt applying method | Bt/At | Bv/Av | Test period (day) |
|---|---|---|---|---|---|---|---|---|---|---|---|---|---|
| | | Minimum temperature (°C) | Maximum relative humidity (%) | Time (h) at relative humidity≥75% (At) | Maximum temperature (°C) | Minimum relative humidity (%) | Time (h) at relative humidity<75% (Bt) | | | | | | |
| Invention example 1 | Repetition of dry process and wet process | 50 | 100 | 4 | 60 | 25 | 4 | 300 | 150 | Spray 5% NaCl solution to specimen for 2h in process A one time in repeating process A and process B one time | 1.0 | 0.5 | 60 |
| Invention example 2 | Repetition of dry process and wet process | 30 | 90 | 12 | 40 | 60 | 12 | 30 | 30 | Deposit artificial seawater solution on specimen by pipet in process A one time in repeating process A and process B 7 times | 1.0 | 1.0 | 180 |
| Invention example 3 | Repetition of dry process and wet process | 25 | 100 | 8.75 | 50 | 40 | 15.25 | 8.6 | 30 | immerse specimen in artificial seawater solution for 0.25h in process A one time in repeating process A and process B 14 times | 1.7 | 3.5 | 180 |
| Invention example 4 | Repetition of dry process and wet process | 50 | 100 | 6 | 60 | 25 | 2 | 150 | 75 | Spray 5% NaCl solution to specimen for 2h in process A one time in repeating process A and process B one time | 0.33 | 0.5 | 60 |
| invention example 5 | Repetition of dry process and wet process | 25 | 100 | 4.5 | 50 | 40 | 19.5 | 15 | 30 | immerse specimen in natural seawater solution for 0.25h in process A one time in repeating process A and process B 14 times | 4.3 | 2.0 | 180 |
| Comparison example 1 | immersion | 40 | Always wet | Always | - | - | - | - | - | Always immerse specimen in artificial seawater | 0.0 | - | 360 |
| Comparison example 2 | Wetting | 35 | Always wet | Always | ₋ | - | - | - | - | Always spray 5% NaCl solution to specimen | 0.0 | - | 360 |
| Comparison example 3 | Repetition of dry process and wet process | 25 | 100 | 23 | 50 | 40 | 1 | 240 | 240 | immerse specimen in natural seawater solution for 0.25h in process A one time in repeating process A and process B 14 times | 0.04 | 1.0 | 180 |
| Comparison example 4 | Repetition of dry process and wet process | 25 | 100 | 1.8 | 50 | 40 | 22.2 | 60 | 60 | immerse specimen in 3% NaCI solution for 0.25h in process A one time in repeating process A and process B 7 times | 12.3 | 1.0 | 180 |
| Comparison example 5 | Repetition of dry process and wet process | 50 | 100 | 5 | 60 | 25 | 3 | 300 | 21 | Spray 5% NaCI solution to specimen for 2h in process A one time in repeating process A and process B one time | 0.6 | 0.07 | 60 |
| Comparison example 6 | Repetition of dry process and wet process | 50 | 100 | 2.8 | 60 | 25 | 5.2 | 37.5 | 300 | Spray 5% NaCl solution to specimen for 2h in process A one time in repeating process A and process B one time | 1.9 | 8.0 | 60 |

**[Table 3]**

| | Area of swelling of paint film (per scratch length 10mm) (mm²) | | | | | Ratio of area of swelling of paint film (with respect to steel plate A) (%) | | | | |
|---|---|---|---|---|---|---|---|---|---|---|
| | Steel plate A | Steel plate B | Steel plate C | Steel plate D | Steel plate E | Steel plate A | Steel plate B | Steel plate C | Steel plate D | Steel plate E |
| Exposure in actual ship | 302 | 352 | 428 | 189 | 89 | 100 | 117 | 142 | 63 | 29 |
| Invention example 1 | 210 | 269 | 334 | 137 | 84 | 100 | 128 | 159 | 65 | 40 |
| Invention example 2 | 224 | 252 | 308 | 145 | 62 | 100 | 113 | 138 | 65 | 28 |
| Invention example 3 | 215 | 255 | 310 | 125 | 78 | 100 | 119 | 144 | 58 | 36 |
| Invention example 4 | 195 | 218 | 257 | 131 | 77 | 100 | 112 | 132 | 67 | 39 |
| Invention example 5 | 185 | 232 | 283 | 107 | 44 | 100 | 125 | 153 | 58 | 24 |
| Comparison example 1 | 220 | 176 | 88 | 170 | 161 | 100 | 80 | 40 | 77 | 73 |
| Comparison example 2 | 145 | 115 | 65 | 113 | 135 | 100 | 79 | 45 | 78 | 93 |
| Comparison example 3 | 180 | 162 | 108 | 144 | 156 | 100 | 90 | 60 | 80 | 87 |
| Comparison example 4 | 98 | 111 | 70 | 69 | 58 | 100 | 113 | 71 | 70 | 59 |
| Comparison example 5 | 240 | 232 | 271 | 167 | 189 | 100 | 97 | 113 | 70 | 79 |
| Comparison example 6 | 140 | 156 | 99 | 95 | 80 | 100 | 111 | 71 | 68 | 57 |

## Claims

1. A corrosion evaluation test method for evaluating corrosion of a back side of an upper deck of a ballast tank of a ship where, in a corrosion evaluation test cycle where a specimen is subjected to a wet process A of relative humidity of 75% or more and a dry process B of relative humidity of less than 75% and the wet process and the dry process are repeated alternately, the relationship between a time (At) where the specimen is subjected to the wet process A and a time (Bt) where the specimen is subjected to the dry process B is set to 0.05 ≤ Bt/At ≤ 10, the relationship between a wetting rate (Av) and a drying rate (Bv) is set to 0.1 ≤ Bv/Av ≤ 3.8, and in the wet process, salt is applied to the specimen by spraying any one solution out of sodium chloride aqueous solution, artificial seawater solution or natural ocean water solution to the specimen, by immersing the specimen in the solution or applying the solution to the specimen, wherein
Av is a value obtained by dividing a relative humidity change amount when a process is shifted from the dry process to the wet process by time, and Bv is a value obtained by dividing a relative humidity change amount when the process is shifted from the wet process to the dry process by time.

2. A corrosion evaluation test method for evaluating corrosion of a back side of an upper deck of a ballast tank of a ship according to claim 1, wherein the repeating number of times of the wet process A and the dry process B is 30 times or more and, at a rate of one time or more in 30 times, in the wet process, the salt is applied to the specimen by spraying any one solution out of sodium chloride aqueous solution, artificial seawater solution or natural ocean water solution to the specimen, by immersing the specimen in the solution or applying the solution to the specimen.

3. A corrosion evaluation test method for evaluating corrosion of a back side of an upper deck of a ballast tank of a ship where, in a corrosion evaluation test cycle where a specimen is subjected to a wet process A of relative humidity of 75% or more and a dry process B of relative humidity of less than 75% and the wet process and the dry process are repeated alternately at least 30 times or more, the relationship between a time (At) where the specimen is subjected to the wet process A and a time (Bt) where the specimen is subjected to the dry process B is set to 0.05 ≤ Bt/At ≤ 10, the relationship between a wetting rate (Av) and a drying rate (Bv) is set to 0. 1 ≤ Bv/Av ≤ 3.8, and, at a rate of one time or more in 30 times of the repeating number of times of the wet process A and the dry process B, in the wet process, the salt is applied to the specimen by spraying any one solution out of sodium chloride aqueous solution, artificial seawater solution or natural ocean water solution to the specimen, by immersing the specimen in the solution or applying the solution to the specimen, wherein
Av is a value obtained by dividing a relative humidity change amount when a process is shifted from the dry process to the wet process by time, and Bv is a value obtained by dividing a relative humidity change amount when the process is shifted from the wet process to the dry process by time.
